# DEMANDE DE BREVET EUROPEEN

(11) **EP 2 932 816 A1**
(43) Date de publication de la demande: **21.10.2015**
(21) Numéro de dépôt: 15162970.6
(22) Date de dépôt: 09.04.2015
(51) Int. Cl.: A01B 29/04

(54) **ROULEAU, NOTAMMENT AGRICOLE, POUR LE TRAVAIL DU SOL, ET DISPOSITIF POUR LE TRAVAIL DU SOL INTEGRANT UN TEL ROULEAU**

(30) Priorité: 18.04.2014 FR 1453526
(71) Demandeur: Unia Investments S.à.r.l., 2453 Luxembourg (LU)
(72) Inventeur: Guzowski, Andrzej, 86-300 GRUDZIADZ (PL)
(74) Mandataire: Godineau, Valérie

(57) **Abrégé**

L'invention concerne un rouleau (1), notamment agricole, pour le travail du sol, ledit rouleau (1) comprenant un arbre (2), apte à être entrainé en rotation autour d'un axe (XX'), et s'étendant d'une extrémité à l'autre dudit rouleau (1), et une pluralité d'éléments (3) disposés côte à côte le long dudit arbre (2), au moins un, de préférence chaque élément (3) comprend un cerclage (4), coaxial à l'axe (XX') de rotation de l'arbre (2), et des moyens (5) élastiquement déformables reliant le cerclage (4) à l'arbre (2)

Les moyens (5) élastiquement déformables reliant le cerclage (4) à l'arbre (2) d'au moins l'un des éléments (3) comprennent des ressorts (51) à lame, en ce qu'au moins l'un, de préférence chaque, ressort (51) à lame affecte la forme d'un C couplé, par l'une de ses extrémités, au cerclage (4) et, par son autre extrémité par vissage à l'arbre (2) et en ce que les moyens (6) de liaison par vissage d'un ressort (51) à lame à l'arbre (2) sont communs aux moyens (6) de liaison par vissage d'un autre ressort (51) à lame à l'arbre (2).

## Description

La présente invention concerne un rouleau, notamment agricole, pour le travail du sol, ainsi qu'un dispositif pour le travail du sol intégrant un tel rouleau.

Elle concerne plus particulièrement un rouleau comprenant un arbre, apte à être entraîné en rotation autour d'un axe et s'étendant d'une extrémité à l'autre dudit rouleau, et une pluralité d'éléments disposés côte à côte le long dudit arbre, au moins un, de préférence chaque élément comprend un cerclage, coaxial à l'axe de rotation de l'arbre, et des moyens élastiquement déformables reliant le cerclage à l'arbre.

Un tel rouleau, destiné notamment à être installé derrière des machines de travail du sol telles que déchaumeuses, semoirs, charrues ou autres est connu à ceux versés dans cet art, comme l'illustre le modèle d'utilité allemand DE-20106545.

Outre le caractère autonettoyant du rouleau résultant du fait que chaque élément est animé d'un déplacement relatif par rapport aux éléments adjacents, ce déplacement relatif tendant à décoller la terre desdits éléments et à conférer un caractère autonettoyant audit rouleau, il est nécessaire que le rouleau s'adapte aisément à tout type de sol et présente des pièces d'usure rapides et aisées à changer et soit de fabrication simple. Ce n'est pas le cas du rouleau décrit dans le document DE-20106545.

Un but de la présente invention est donc de proposer un rouleau du type précité, dont la conception permet une fabrication aisée et un remplacement facilité des pièces d'usure, sans nuire au caractère autonettoyant dudit rouleau.

À cet effet, l'invention a pour objet un rouleau, notamment agricole, pour le travail du sol, ledit rouleau comprenant un arbre, apte à être entrainé en rotation autour d'un axe, et s'étendant d'une extrémité à l'autre dudit rouleau, et une pluralité d'éléments disposés côte à côte le long dudit arbre, au moins un, de préférence chaque élément comprend un cerclage, coaxial à l'axe de rotation de l'arbre, et des moyens élastiquement déformables reliant le cerclage à l'arbre, caractérisé en ce que les moyens élastiquement déformables reliant le cerclage à l'arbre d'au moins l'un des éléments comprennent des ressorts à lame, en ce qu'au moins l'un, de préférence chaque, ressort à lame affecte la forme d'un C couplé, par l'une de ses extrémités, au cerclage et, par son autre extrémité par vissage à l'arbre et en ce que les moyens de liaison par vissage d'un ressort à lame à l'arbre sont communs aux moyens de liaison par vissage d'un autre ressort à lame à l'arbre.

Grâce à la conception de chaque élément du rouleau, le caractère autonettoyant du rouleau est conservé. La présence d'un cerclage à titre de pièce d'usure permet un changement rapide et aisé de la pièce d'usure, tout en offrant la possibilité d'une adaptation du rouleau à chaque type de sol, par adaptation du cerclage. L'utilisation de moyens de liaison à l'arbre communs à deux ressorts à lame permet la fixation, à l'aide d'un seul organe de liaison, des deux ressorts à lame. Il en résulte un gain de pièces et de temps. De même, la forme en C des ressorts à lame et la présence d'un cerclage permettent de faciliter la liaison ressort à lame/cerclage avec un nombre de pièces réduit et une facilité de démontage au niveau de ladite liaison.

De préférence, les moyens de liaison par vissage d'un ressort à lame à l'arbre sont formés par un boulon qui traverse l'extrémité en applique sur l'arbre d'un ressort à lame avant de traverser l'arbre puis de traverser l'extrémité en applique sur l'arbre d'un autre ressort à lame. Ainsi, un seul et même boulon permet la fixation simultanée de deux ressorts à lame.

De préférence, la longueur du boulon est inférieure à la hauteur du C du ressort à lame qu'il fixe audit arbre, cette hauteur correspondant à la distance séparant les deux extrémités libres du C à l'état non sollicité du rouleau. Il en résulte la possibilité de préparer chaque élément avant leur montage sur l'arbre puis de les fixer à l'arbre à l'aide d'un seul boulon.

De préférence, le cerclage est formé d'une bande en un ou plusieurs morceaux.

De préférence, le cerclage est formé de deux bandes, les extrémités adjacentes desdites bandes étant fixées à une même extrémité d'un ressort à lame, cette extrémité du ressort à lame positionnée en applique sur la surface périphérique interne, c'est-à-dire la surface tournée vers l'intérieur, du cercle dudit cerclage formant pont de liaison entre lesdites bandes.

De préférence, les extrémités adjacentes des bandes du cerclage sont fixées par vissage à une même extrémité d'un ressort à lame. Grâce à cette conception, il est possible en vissant ou respectivement en démontant deux boulons de monter ou respectivement de démonter un élément de l'arbre. Il en résulte une simplicité de l'ensemble.

De préférence, les ressorts à lame sont répartis circonférentiellement de manière régulière à l'intérieur du cerclage.

De préférence, les ressorts à lame d'un élément sont décalés angulairement par rapport aux ressorts à lame d'un élément adjacent. Il en résulte la possibilité de rigidifier aisément le rouleau pour éviter tout risque d'affaissement du rouleau au cours de son fonctionnement.

De préférence, les moyens élastiquement déformables sont fixés au cerclage et/ou à l'arbre par vissage.

De préférence, l'arbre est de section transversale polygonale. Il en résulte une fixation aisée des moyens élastiquement déformables à l'arbre, sans nécessiter l'ajout de pièces de fixation supplémentaires.

De préférence, le cerclage est en métal.

De préférence, le cerclage présente un profil transversal plat ou en V ou en T ou en U avec le V ouvert vers l'intérieur du cerclage et le T ou le U ouvert vers l'extérieur du cerclage. Le profil du cerclage peut ainsi être choisi en fonction de la nature du sol à travailler.

L'invention a encore pour objet un dispositif comprenant un châssis et un rouleau, ledit rouleau comprenant un arbre, s'étendant d'une extrémité à l'autre du rouleau, et couplable à rotation audit châssis, et une pluralité d'éléments disposés côte à côte le long dudit arbre, au moins un, de préférence chaque élément comprend un cerclage, coaxial à l'axe XX' de rotation de l'arbre, et des moyens élastiquement déformables reliant le cerclage 4 à l'arbre, caractérisé en ce que le rouleau est du type précité.

L'invention sera bien comprise à la lecture de la description suivante d'exemples de réalisation, en référence aux dessins annexés dans lesquels :
- La figure 1 représente une vue en perspective d'un dispositif pour le travail du sol conforme à l'invention ;

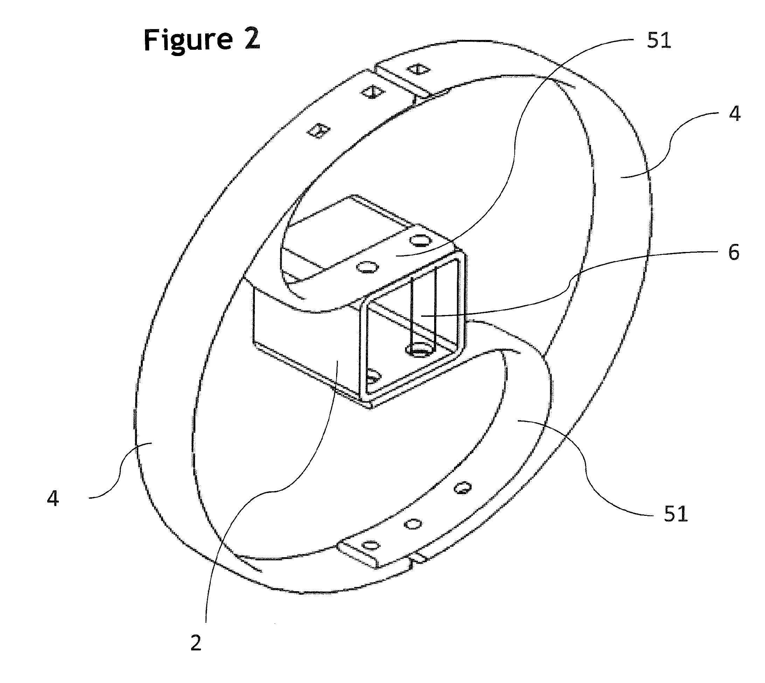

- La figure 2 représente une vue en perspective d'un élément dudit rouleau ;
- La figure 3 représente une vue en perspective de deux éléments adjacents dudit rouleau ;

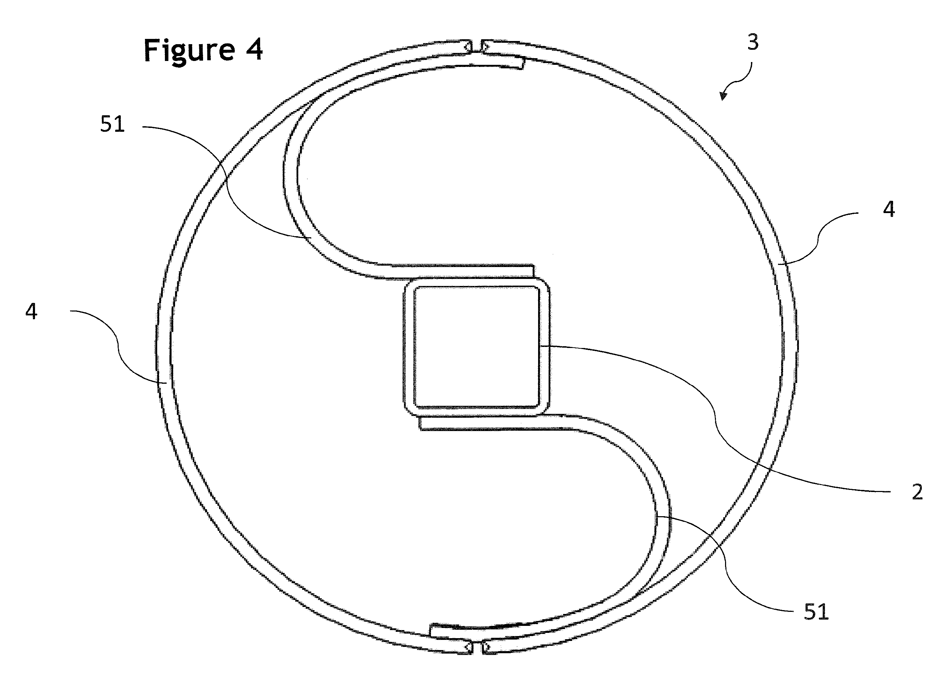

- La figure 4 représente une vue de côté d'un élément dudit rouleau.

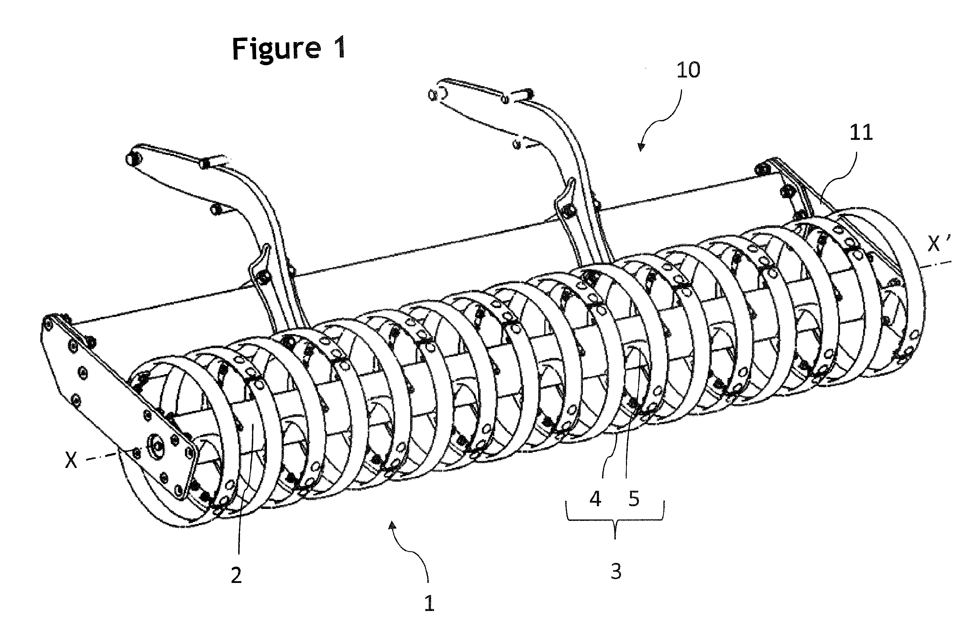

Comme mentionné ci-dessus, le rouleau 1, objet de l'invention, est plus particulièrement destiné à être couplé à un châssis 11 du type par exemple de celui représenté à la figure 1, pour former un dispositif 10 pour le travail du sol apte à être couplé à l'arrière d'une machine de travail du sol à disques, à lames ou autres telle qu'une déchaumeuse, une charrue ou un semoir.

Ledit rouleau 1 comprend donc un arbre 2 apte à être entraîné en rotation autour d'un axe XX' passant par l'axe longitudinal dudit arbre 2. Cet arbre 2 est donc destiné à tourner autour d'un axe XX' s'étendant sensiblement horizontalement en position d'appui au sol dudit rouleau. Cet arbre 2 s'étend depuis une extrémité en direction de l'autre extrémité du rouleau et se termine à chacune de ses extrémités par un bout d'arbre apte à s'insérer dans un palier du châssis 11 pour un montage libre à rotation de l'arbre 2 sur ledit châssis 11.

Dans l'exemple représenté, le châssis 11 comprend une poutre s'étendant sensiblement parallèlement à l'axe de rotation de l'arbre du rouleau et deux bras couplant chacun une extrémité de la poutre à une extrémité de l'arbre. L'arbre 2 est donc, à chacune de ses extrémités, monté libre à rotation sur un bras dudit châssis 11.

La poutre du châssis est équipée de moyens d'attelage du châssis au reste de la machine de travail du sol.

À l'état couplé du châssis au reste de la machine, le rouleau est apte à reposer au sol et à tourner autour de son axe XX' au fur et à mesure de l'avancement de la machine.

Le rouleau 1 comprend encore une pluralité d'éléments 3, en l'occurrence ici 17 éléments 3 disposés côte à côte, le long dudit arbre 2. Ces éléments 3 sont solidaires en rotation dudit arbre 2.

Dans l'exemple représenté, chaque élément 3 comprend un cerclage 4 coaxial à l'axe de rotation de l'arbre 2 et des moyens 5 élastiquement déformables reliant le cerclage 4 à l'arbre 2.

Les moyens 5 élastiquement déformables sont quant à eux formés par des ressorts 51 à lame, au nombre de deux par cerclage dans les exemples représentés.

Bien évidemment, le nombre de ressorts 51 à lame par cerclage aurait pu être plus élevé. Indépendamment du nombre de ressorts à lame, ces ressorts 51 à lame sont, de préférence, couplés au cerclage de manière équidistante suivant la direction circonférentielle pour permettre un bon équilibrage de l'élément ainsi réalisé.

Chaque ressort 51 à lame affecte la forme d'un C couplé par l'une de ses extrémités par vissage au cerclage 4 et par son autre extrémité par vissage à l'arbre 2.

Pour des raisons de simplification, les moyens 6 de liaison par vissage d'un ressort 51 à lame à l'arbre 2 sont communs aux moyens 6 de liaison par vissage d'un autre ressort 51 à lame à l'arbre 2. Ces moyens 6 de liaison par vissage d'un ressort 51 à lame à l'arbre 2 sont formés par un boulon qui traverse l'extrémité en applique sur l'arbre d'un ressort 51 à lame avant de traverser l'arbre 2 puis de traverser l'extrémité en applique sur l'arbre 2 d'un autre ressort 51 à lame. Ainsi, un seul et même boulon permet la fixation simultanée de deux ressorts 51 à lame.

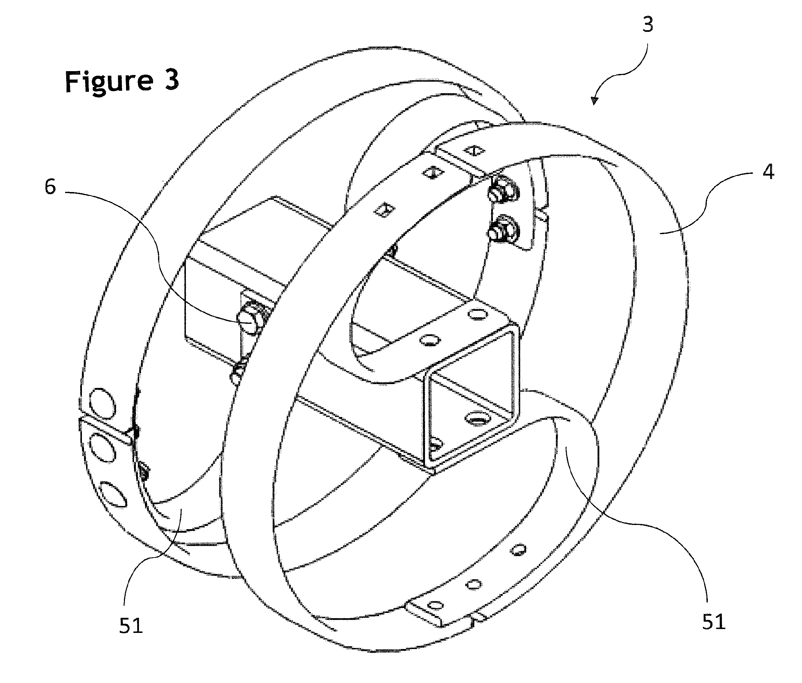

Comme l'arbre 2 est un arbre de section quadrangulaire, cette fixation est facilitée du fait de la présence de faces planes au niveau dudit arbre. Les deux ressorts 51 à lame du cerclage d'un élément sont décalés de 90° par rapport aux deux ressorts à lame du cerclage d'un élément adjacent, comme l'illustre la figure 3, pour conférer de la rigidité audit rouleau.

Le cerclage 4 des éléments est quant à lui réalisé en métal et est ici formé de deux bandes disposées dans le prolongement l'une de l'autre et fixées, à chacune de leurs extrémités, par vissage à une extrémité d'un ressort à lame, en l'occurrence l'extrémité du ressort venant en applique sur la surface périphérique interne, c'est-à-dire la surface tournée vers l'intérieur du cercle dudit cerclage. Comme le cerclage 4 est formé de deux bandes, les extrémités adjacentes desdites bandes étant fixées à une même extrémité d'un ressort 51 à lame, cette extrémité du ressort 51 à lame positionnée en applique sur la surface périphérique interne dudit cerclage 4 forme pont de liaison entre lesdites bandes. Il en résulte à nouveau une simplicité de l'ensemble, le ressort à lame étant utilisé comme pièce de liaison des bandes du cerclage.

Dans l'exemple représenté, le cerclage 4 présente un profil transversal plat. Toutefois, ce profil aurait pu être réalisé en V ouvert vers l'intérieur du cerclage ou en T ou en U ouvert vers l'extérieur du cerclage 4. Ce profil est choisi en fonction de la nature du sol à travailler.

Le fonctionnement d'un tel rouleau est similaire à celui d'un rouleau de l'état de la technique et ne sera donc pas décrit en détail ci-après.

## Revendications

1. Rouleau (1), notamment agricole, pour le travail du sol, ledit rouleau (1) comprenant un arbre (2), apte à être entrainé en rotation autour d'un axe (XX'), et s'étendant d'une extrémité à l'autre dudit rouleau (1), et une pluralité d'éléments (3) disposés côte à côte le long dudit arbre (2), au moins un, de préférence chaque élément (3) comprend un cerclage (4), coaxial à l'axe (XX') de rotation de l'arbre (2), et des moyens (5) élastiquement déformables reliant le cerclage (4) à l'arbre (2),
**caractérisé en ce que** les moyens (5) élastiquement déformables reliant le cerclage (4) à l'arbre (2) d'au moins l'un des éléments (3) comprennent des ressorts (51) à lame, **en ce qu'**au moins l'un, de préférence chaque, ressort (51) à lame affecte la forme d'un C couplé, par l'une de ses extrémités, au cerclage (4) et, par son autre extrémité par vissage à l'arbre (2) et **en ce que** les moyens (6) de liaison par vissage d'un ressort (51) à lame à l'arbre (2) sont communs aux moyens (6) de liaison par vissage d'un autre ressort (51) à lame à l'arbre (2).

2. Rouleau (1) selon la revendication 1,
**caractérisé en ce que** les moyens (6) de liaison par vissage d'un ressort (51) à lame à l'arbre (2) sont formés par un boulon qui traverse l'extrémité en applique sur l'arbre d'un ressort (51) à lame avant de traverser l'arbre (2) puis de traverser l'extrémité en applique sur l'arbre (2) d'un autre ressort (51) à lame.

3. Rouleau (1) selon la revendication 2,
**caractérisé en ce que** la longueur du boulon est inférieure à la hauteur du C du ressort (51) à lame qu'il fixe audit arbre (2), cette hauteur correspondant à la distance séparant les deux extrémités libres du C à l'état non sollicité du rouleau.

4. Rouleau (1) selon l'une des revendications précédentes,
**caractérisé en ce que** le cerclage (4) est formé d'une bande en un ou plusieurs morceaux.

5. Rouleau (1) selon l'une des revendications précédentes,
**caractérisé en ce que** le cerclage (4) est formé de deux bandes, les extrémités adjacentes desdites bandes étant fixées à une même extrémité d'un ressort (51) à lame, cette extrémité du ressort (51) à lame positionnée en applique sur la surface périphérique interne, c'est-à-dire la surface tournée vers l'intérieur, du cercle dudit cerclage (4) formant pont de liaison entre lesdites bandes.

6. Rouleau (1) selon la revendication 5,
**caractérisé en ce que** les extrémités adjacentes des bandes du cerclage (4) sont fixées par vissage à une même extrémité d'un ressort (51) à lame.

7. Rouleau (1) selon l'une des revendications précédentes,
**caractérisé en ce que** les ressorts (51) à lame sont répartis circonférentiellement, de manière régulière, à l'intérieur du cerclage (4).

8. Rouleau (1) selon l'une des revendications précédentes,
**caractérisé en ce que** les ressorts (51) à lame d'un élément (3) sont décalés angulairement par rapport aux ressorts (51) à lame d'un élément (3) adjacent.

9. Rouleau (1) selon l'une des revendications précédentes,
**caractérisé en ce que** l'arbre (2) est de section transversale polygonale.

10. Rouleau (1) selon l'une des revendications précédentes,
**caractérisé en ce que** le cerclage (4) est en métal.

11. Rouleau (1) selon l'une des revendications précédentes,
**caractérisé en ce que** le cerclage (4) présente un profil transversal plat ou en V ou en T ou en U avec le V ouvert vers l'intérieur du cerclage (4) et le T ou le U ouvert vers l'extérieur du cerclage (4).

12. Dispositif (10), notamment agricole, pour le travail du sol, le dispositif (10) comprenant un châssis (11) et un rouleau (1), ledit rouleau (1) comprenant un arbre (2), s'étendant d'une extrémité à l'autre du rouleau, et couplable à rotation audit châssis (11), et une pluralité d'éléments (3) disposés côte à côte le long dudit arbre (2), au moins un, de préférence chaque élément (3) comprend un cerclage (4), coaxial à l'axe (XX') de rotation de l'arbre (2), et des moyens (5) élastiquement déformables reliant le cerclage (4) à l'arbre (2), **caractérisé en ce que** ledit rouleau (1) est conforme à l'une des revendications 1 à 11.
